# EUROPÄISCHE PATENTANMELDUNG

(11) **EP 1 431 072 A1**
(43) Veröffentlichungstag der Anmeldung: **23.06.2004**
(21) Anmeldenummer: 03028402.0
(22) Anmeldetag: 11.12.2003
(51) Int. Cl.: B60B 35/04, B60B 35/08, B21K 1/06, B60G 21/05

(54) **Verfahren zur Fertigung von Achsschenkeln für Achskörper, sowie Achskörper mit solchen Achsschenkeln**

(30) Priorität: 18.12.2002 DE 10259151
(71) Anmelder: BPW Bergische Achsen KG, 51674 Wiehl (DE)
(72) Erfinder: Leidig, Hans-Josef, 51580 Reichshof (DE)
(74) Vertreter: Christophersen & Partner

(57) **Zusammenfassung**

Vorgeschlagen werden Verfahren zur Fertigung von Achsschenkel zur Verwendung in Achskörpern, vorzugsweise für Fahrzeuganhänger-Achsen. Das Verfahren zur Fertigung von Achsschenkeln ist gekennzeichnet durch die Schritte
a. mechanisches Umformen eines Rohlings zu einem sich zu seinen beiden Enden hin verjüngenden Umformkörper (3),
b. Einspannen des Umformkörpers (3) in eine Werkstückaufnahme (5) einer spanenden Werkzeugmaschine und spanende Bearbeitung des Umformkörpers (3),
c. Durchtrennung des Umformkörpers (3) in der Trennebene (10) unter Bildung zweier getrennter Achsschenkel.

Durch die Fertigung zweier Achsschenkel in einem gemeinsamen Verfahren, wobei die Trennung erst später erfolgt, läßt sich der Bearbeitungsaufwand senken, ferner werden die verschiedenen Zentrier- und Aufnahmevorgänge bei der Bearbeitung halbiert, so daß sich Achsschenkel für Fahrzeugachsen wesentlich kostengünstiger herstellen lassen.

## Beschreibung

Die Erfindung betrifft zunächst ein Verfahren zur Fertigung von Achsschenkeln für einen aus zwei Achsschenkeln und einem dazwischen befestigten Achsrohr zusammengesetzten Achskörper. Des weiteren betrifft die Erfindung ein Verfahren zur Herstellung eines Achskörpers aus einem Achsrohr und an dessen beiden Enden befestigten Achsschenkeln. Ferner betrifft die Erfindung einen gemäß einem solchen Verfahren hergestellten Achskörper.

Für die Verwendung insbesondere bei Fahrzeuganhänger-Achsen für LKW-Anhänger kommen überwiegend dreiteilige Achskörper zum Einsatz, die sich aus einem hohlen Achsrohr sowie zwei an den Enden des Achsrohres durch Stumpfschweißen angesetzten Achsschenkel zusammensetzen. Auf den Achsschenkeln sind die Radnaben frei drehbar gelagert. Das Achsrohr kann einteilig geformt sein oder sich seinerseits aus zwei offenen Profilen zusammensetzen, die unter Ziehung zweier Schweißnähte gegeneinander gesetzt sind. Der Querschnitt des Achsrohres kann beispielsweise rund oder quadratisch mit abgerundeten Kanten sein. Die Herstellung der Achsschenkel erfolgt in einem getrennten Herstellungsprozeß jeweils durch Warmverformen eines Achskörperrohlings durch Umformverfahren wie z. B. Stauchen, Schmieden und/oder Pressen. Der durch diesen Prozeß erzeugte Umformkörper wird anschließend durch spanende Bearbeitung auf die gewünschten Endmaße bearbeitet. Im Rahmen dieser spanenden Bearbeitung werden z. B. die Lagersitze für die später auf dem Achsschenkel angeordneten Wälzlager drehend bearbeitet, zum Teil erfolgt die Fertigbearbeitung des Achsschenkels auch durch Bohr- und Fräsarbeiten. Es kann erforderlich sein, den Umformkörper einmal umzuspannen, um so z. B. zunächst die zu überdrehenden Flächen zu bearbeiten, und später jene Flächen am anderen Ende des Achsschenkels, die später der Verbindung mit dem Achsrohr dienen.

Da jeder Achsschenkel in der geschilderten Weise einzeln und häufig in mehr als einer Einspannung bearbeitet werden muß, sind die Herstellungskosten hoch.

Der Erfindung liegt die **Aufgabe** zugrunde, ein Verfahren zu entwickeln, mit dem sich Achsschenkel mit geringerem Aufwand und damit zu geringeren Fertigungskosten produzieren lassen. Des weiteren soll ein entsprechendes Verfahren zur Herstellung eines Achskörpers aus einem Achsrohr und daran befestigten Achsschenkeln entwickelt werden sowie schließlich ein mit einem solchen Verfahren herstellbarer Achskörper.

Zur **Lösung** dieser Aufgabe wird zunächst ein Verfahren zur Fertigung von Achsschenkeln mit den eingangs genannten Merkmalen vorgeschlagen, welches durch die folgenden Schritte gekennzeichnet ist:
a. mechanisches Umformen eines Rohlings zu einem sich zu seinen beiden Enden hin verjüngenden Umformkörper,
b. Einspannen des Umformkörpers in eine Werkstückaufnahme einer spanenden Werkzeugmaschine und spanende Bearbeitung des Umformkörpers,
c. Durchtrennung des Umformkörpers unter Bildung zweier getrennter Achsschenkel, wobei die entstehenden Trennquerschnitte der späteren Verbindung mit dem Achsrohr dienen.

Sowohl die Umformung, vorzugsweise durch Warmverformung nach induktiver Aufheizung, wie auch die spanende Bearbeitung erfolgt daher erfindungsgemäß bei einem Rohling bzw. einem aus dem Rohling umgeformten Umformkörper, der sich aus zwei vorzugsweise zueinander symmetrischen Hälften zusammensetzt. Aus der einen Hälfte entsteht in Folge eines nachgeordneten Trennschrittes ein erster Achsschenkel, aus der anderen Hälfte ein zweiter Achsschenkel. Im Ergebnis werden daher zwei Achsschenkel gleichzeitig und in gemeinsamen Fertigungsschritten hergestellt. Erst in einem letzten Verfahrensschritt erfolgt die vorzugsweise mittige Durchtrennung des bereits auf Fertigmaß bearbeiteten Umformkörpers unter Bildung zweier dann getrennter, gleichartiger Achsschenkel. Unter Anwendung dieses Verfahrens lassen sich die Fertigungskosten für Achsschenkel durch eingesparte Einspannoperationen deutlich senken, was im Ergebnis zu ebenfalls deutlich reduzierten Fertigungskosten für den fertigen Achskörper führt.

Von weiterem Vorteil sind die durch die Halbierung der Stückzahlen an Rohteilen erzielten logistischen Vorteile beim Hersteller.

Zur Lösung der oben genannten Aufgabe wird ferner ein Verfahren zur Herstellung eines Achskörpers mit den eingangs genannten Merkmalen vorgeschlagen, welches durch die folgenden Schritte gekennzeichnet ist:
a. mechanisches Umformen eines Rohlings zu einem sich zu seinen beiden Enden hin verjüngenden Umformkörper,
b. Einspannen des Umformkörpers in eine Werkstückaufnahme einer spanenden Werkzeugmaschine und spanende Bearbeitung des Umformkörpers,
c. Durchtrennung des Umformkörpers unter Bildung zweier getrennter Achsschenkel.
d. Distanzierung der getrennten Achsschenkel und Einfügen des Achsrohrs in den so gebildeten Zwischenraum,
e. Verschweißen des Achsrohrs mit jedem der beiden Achsschenkel.

Ferner wird vorgeschlagen, daß sämtliche spanenden Bearbeitungen des Umformkörpers in derselben Einspannung durchgeführt werden. Dies ermöglicht nochmals schnellere Durchlaufzeiten bei der Bearbeitung. Die Zentrier- und Aufnahmevorgänge zur Vorbereitung der spanenden Bearbeitung des Umformkörpers lassen sich auf diese Weise halbieren.

Mit einer Ausgestaltung des Verfahrens zur Herstellung eines Achskörpers wird ferner vorgeschlagen, daß der Rohling in seiner Mitte zu einem quadratischen Vierkant-Querschnitt umgeformt wird, und daß die bei der Durchtrennung des Umformkörpers entstehenden Trennflächen mit dem im Querschnitt ebenfalls quadratischen Achsrohr verschweißt werden.

In einer weiteren Ausgestaltung der vorgeschlagenen Verfahren wird die Umformung des Rohlings bei einer Temperatur zwischen 1100° C und 1200° C durchgeführt.

Nachfolgend wird die Erfindung anhand eines Ausführugsbeispieles und unter Bezugnahme auf die Zeichnungen erläutert. Darin zeigen:
- Fig. 1: einen Rohling in Form eines Rohres vor der Umformung;
- Fig. 2: den Rohling während der Umformung zu einem Umformkörper;
- Fig. 3: den Umformkörper, eingespannt in die Werkzeugaufnahme einer Werkzeugmaschine während der spanenden Bearbeitung;
- Fig. 4: den Fertigmaß aufweisenden Umformkörper nach Abschluß der spanenden Bearbeitung;
- Fig. 5: den Umformkörper nach seiner Durchtrennung in zwei Teilkörper und
- Fig. 6: den fertigen Achskörper.

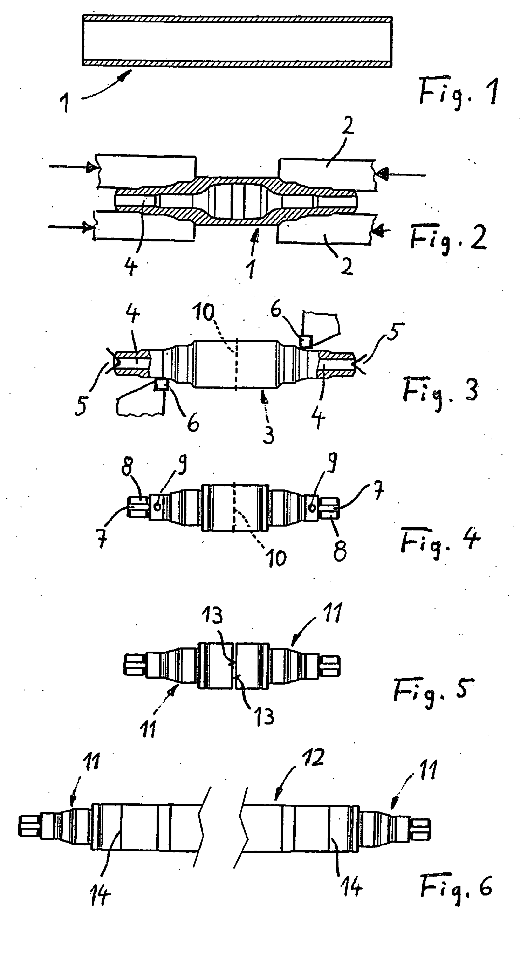

Fig. 1 zeigt einen mindestens die doppelte Länge eines Achsschenkels aufweisenden, rohrförmigen Rohling, welcher durch Warmverformung zu einem Umformkörper verformt wird, vorzugsweise unter Induktionserwärmung. Fig. 2 zeigt stark schematisch den Verformungsprozeß mittels mehrerer Stauchwerkzeuge 2. Ergebnis des Umformprozesses, der auch ein Schmiedeprozeß sein kann, ist ein Umformkörper 3, dessen Außenkontur mit gewissen Bearbeitungszugaben im wesentlichen der Außenkontur zweier Achsschenkel entspricht. Der Umformkörper 3 weist seinen größten Querschnitt in der Mitte auf, zu seinen Enden hin verjüngt er sich symmetrisch, wobei eine zentrale Bohrung 4 vorzugsweise erhalten bleibt. Der Querschnitt in der Mitte, d. h. im Bereich der späteren Trennebene 10, weist in etwa die Anschlußmaße des Achsrohrs 12 (Fig. 6) auf.

Anschließend wird der Umformkörper der Stauch- oder Schmiedepresse entnommen und in die Werkzeugaufnahme einer Werkzeugmaschine eingespannt. Fig. 3 zeigt hierzu die Einspannung des Umformkörpers 3 über die Spitzen, wobei Zentrierspitzen 5 der Werkzeugmaschine in die Enden der zentralen Bohrung 4 des Umformkörpers 3 eingreifen. Auf diese Weise zentriert auf den drehbaren Spitzen 5 der Werkzeugmaschine, erfolgt die spanende Bearbeitung der Außenflächen des Umformkörpers 3 bis auf Fertigmaß. Denkbar ist auch das Einspannen eines massiven Umformkörpers mittels Stirnflächen-Mitnehmern.

In Fig. 3 dargestellt ist der Drehprozeß mittels zweier gleichzeitig arbeitender Drehmeißel als Spanwerkzeuge 6. Vorzugsweise in derselben Einspannung in der Werkzeugmaschine werden auch Fräsarbeiten durchgeführt, wie z. B. zur Herstellung von Längsnuten 7 in den Endzapfen 8 des Körpers. Ferner werden, vorzugsweise wiederum in derselben Einspannung, Bohrungen 9 hergestellt.

Die Fräs- und Bohrarbeiten sind aber auch im Anschluß an das Drehen in einer gesonderten Einspannung durchführbar.

Fig. 4 zeigt den Umformkörper nach Abschluß aller spanenden Bearbeitungen, also auf Fertigmaß. In einem weiteren Verfahrensschritt wird dieser Körper dann entlang der in Fig. 4 gestrichelt gezeichneten Ebene 10 durchtrennt, z. B. mittels einer Diamant-Schneidplatte. Fig. 5 zeigt die daraufhin getrennten beiden Hälften des vorherigen einheitlichen Umformkörpers, bei denen es sich nunmehr um die fertigen Achsschenkel 11 handelt.

Zur Herstellung eines vollständigen Achskörpers werden die beiden Achsschenkel 11 distanziert und in Fluchtung zu dem anderweitig hergestellten Achsrohr 12 gebracht. Abschließend erfolgt das Verschweißen der bei der Trennung entstandenen Anschlußflächen 13 der Achsschenkel 11 mit den beiden Stirnflächen 14 des Achsrohrs 12.

In einer bevorzugten Ausführungsform ist das Achsrohr 12 im Querschnitt quadratisch mit abgerundeten Kanten, was in Fig. 6 zusätzlich symbolisiert ist. In diesem Fall sind auch die Anschlußflächen 13 der Achsschenkel 11 entsprechend quadratisch gestaltet, ebenso wie vorher jener Längsabschnitt des Umformkörpers 3, welches später die Trennebene 10 bildet.

### Bezugszeichenliste

- 1: Rohling
- 2: Stauch-/Schmiedewerkzeug
- 3: Umformkörper
- 4: Bohrung
- 5: Werkstückaufnahme
- 6: Drehmeißel, Spanwerkzeug
- 7: Längsnut
- 8: Endzapfen
- 9: Bohrung
- 10: Trennebene, Trennquerschnitt
- 11: Achsschenkel
- 12: Achsrohr
- 13: Anschlußfläche des Achsschenkels (Trennquerschnitt)
- 14: Stirnfläche des Achsrohrs

## Patentansprüche

1. Verfahren zur Fertigung von Achsschenkeln für einen aus zwei Achsschenkeln und einem dazwischen befestigten Achsrohr zusammengesetzten Achskörper, **gekennzeichnet durch** die Schritte
a. mechanisches Umformen eines Rohlings (1) zu einem sich zu seinen beiden Enden hin verjüngenden Umformkörper (3),
b. Einspannen des Umformkörpers (3) in eine Werkstückaufnahme (5) einer spanenden Werkzeugmaschine und spanende Bearbeitung des Umformkörpers (3),
c. Durchtrennung des Umformkörpers (3) unter Bildung zweier getrennter Achsschenkel (11), wobei die entstehenden Trennquerschnitte (10) der späteren Verbindung mit dem Achsrohr dienen.

2. Verfahren nach Anspruch 1, **dadurch gekennzeichnet, daß** der Rohling in seiner Mitte zu einem quadratischen Vierkant-Querschnitt umgeformt wird.

3. Verfahren nach einem der Ansprüche 1 oder 2, **dadurch gekennzeichnet, daß** sämtliche spanenden Bearbeitungen des Umformkörpers (3) in derselben Einspannung (5) durchgeführt werden.

4. Verfahren nach Anspruch 1, **dadurch gekennzeichnet, daß** die Umformung des Rohlings (1) bei einer Temperatur zwischen 1100° C und 1200° C durchgeführt wird.

5. Verfahren zur Herstellung eines Achskörpers aus einem Achsrohr (12) und an dessen beiden Enden befestigten Achsschenkeln (11),
**gekennzeichnet durch** die Schritte
a. mechanisches Umformen eines Rohlings (1) zu einem sich zu seinen beiden Enden hin verjüngenden Umformkörper (3),
b. Einspannen des Umformkörpers (3) in eine Werkstückaufnahme (5) einer spandenden Werkzeugmaschine und spanende Bearbeitung des Umformkörpers (3),
c. Durchtrennung des Umformkörpers (3) unter Bildung zweier getrennter Achsschenkel (11),
d. Distanzierung der getrennten Achsschenkel (11) und Einfügen des Achsrohrs (12) in den so gebildeten Zwischenraum,
e. Verschweißen des Achsrohrs (12) mit jedem der beiden Achsschenkel (11).

6. Verfahren nach Anspruch 5, **dadurch gekennzeichnet, daß** sämtliche spanenden Bearbeitungen des Umformkörpers (3) in derselben Einspannung (5) durchgeführt werden.

7. Verfahren nach einem der Ansprüche 5 oder 6, **dadurch gekennzeichnet, daß** der Rohling (1) in seiner Mitte zu einem quadratischen Vierkant-Querschnitt umgeformt wird, und daß die bei der Durchtrennung des Umformkörpers (3) entstehenden Trennflächen (13) mit dem im Querschnitt ebenfalls quadratischen Achsrohr (12) verschweißt werden.

8. Verfahren nach Anspruch 5, **dadurch gekennzeichnet, daß** die Umformung des Rohlings (1) bei einer Temperatur zwischen 1100° C und 1200° C durchgeführt wird.

9. Achskörper, vorzugsweise für eine Fahrzeuganhänger-Achse, hergestellt nach einem Verfahren nach einem der Ansprüche 5 bis 8.
